# EUROPÄISCHE PATENTSCHRIFT

(11) **EP 3 674 824 B1**
(45) Veröffentlichungstag und Bekanntmachung des Hinweises auf die Patenterteilung: **23.08.2023**
(21) Anmeldenummer: 18248171.3
(22) Anmeldetag: 28.12.2018
(51) Int. Cl.: G05B 19/418, H04L 12/40, H04L 12/403

(54) **VERFAHREN ZUM BETRIEB EINES KOMMUNIKATIONSSYSTEMS ZUR ÜBERMITTLUNG ZEITKRITISCHER DATEN UND KOMMUNIKATIONSGERÄT**
METHOD FOR OPERATING A COMMUNICATION SYSTEM FOR TRANSFERRING TIME-CRITICAL DATA AND COMMUNICATION DEVICE
PROCÉDÉ DE FONCTIONNEMENT D'UN SYSTÈME DE COMMUNICATION DESTINÉ À LA TRANSMISSION DE DONNÉES CRITIQUES ET APPAREIL DE COMMUNICATION

(43) Veröffentlichungstag der Anmeldung: 01.07.2020
(73) Patentinhaber: Siemens Aktiengesellschaft, 80333 München (DE)
(72) Erfinder: Weichlein, Thomas, 91052 Erlangen (DE)
(74) Vertreter: Siemens Patent Attorneys

(56) Entgegenhaltungen:
- WO-A1-2018/059690
- WO-A1-2018/121864

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus WO 2018/121864 A1 ist ein Verfahren zum Betrieb eines mehrere Kommunikationsgeräte umfassenden Kommunikationsnetzes eines industriellen Automatisierungssystems bekannt, bei dem zumindest eine Steuerungseinheit Funktionen mehrerer zugeordneter Kommunikationsgeräte steuert und zumindest einer Partition des Kommunikationsnetzes zugeordnet ist. Partitionen umfassen jeweils vorgebbare Anteile an Systemressourcen zugeordneter Kommunikationsgeräte für vorgebbare Ressourcennutzungsdauern. Zugriffszeitdauern und Wiederholungszyklen für Sendewarteschlangen werden durch die Steuerungseinheit entsprechend den Ressourcennutzungsdauern für die Partitionen in den zugeordneten Kommunikationsgeräten eingestellt. Für die Pfadreservierungsanfragen werden anhand übereinstimmender Klassifizierungen von Zugriffszeitdauern und Wiederholungszyklen mögliche Partitionen ermittelt. Bei ausreichenden Systemressourcen wird die jeweilige Pfadreservierungsanfrage einer ermittelten Partition zugeordnet. Das in WO 2018/121864 A1 beschriebene Verfahren zielt jedoch nicht darauf ab, Zeitfenster für zyklischen Datenverkehr gleichmäßig zu verteilen, um zur Verfügung stehende Ressourcen effizienter zu nutzen.

WO 2018/059690 A1 betrifft ein Verfahren zum Betrieb eines mehrere Kommunikationsgeräte umfassenden Kommunikationsnetzes eines industriellen Automatisierungssystems, bei dem mehrere Steuerungseinheiten jeweils Funktionen mehrerer zugeordneter Kommunikationsgeräte steuern. Für jede Steuerungseinheit wird ein vorgebbarer Anteil an Systemressourcen eines zugeordneten Kommunikationsgeräts für eine vorgebbare Ressourcennutzungsdauer verfügbar gemacht. Die Steuerungseinheiten erfassen Zustandsgrößen der Kommunikationsgeräte synchron bei Eintritt vorgebbarer Synchronisierungsereignisse und gleichen diese untereinander ab. Außerdem ermitteln die Steuerungseinheiten für zumindest eine vergangene Ressourcennutzungsdauer ermitteln, welche Gütemaßänderungen sich für zu ermittelnde Kommunikationsnetzpfade in Abhängigkeit von einer für eine Pfadermittlung verfügbaren Ermittlungszeit ergeben, und ermitteln anhand der Gütemaßänderungen einen ersten Korrekturwert für die Synchronisierungsereignisse. Bei einem Abgleich der Zustandsgrößen untereinander ermitteln die Steuerungseinheiten in Abhängigkeit inkonsistenter Zustandsgrößen einen zweiten Korrekturwert für die Synchronisierungsereignisse. Das in WO 2018/059690 A1 beschriebene Verfahren zielt ebenfalls nicht darauf ab, Zeitfenster für zyklischen Datenverkehr gleichmäßig zu verteilen, um zur Verfügung stehende Ressourcen effizienter zu nutzen.

Der vorliegenden Erfindung liegt die Aufgabe zugrunde, ein Verfahren zum Betrieb eines Kommunikationssystems zur Übermittlung zeitkritischer Daten schaffen, das sowohl eine effiziente Ausschöpfung zur Verfügung stehender Systemressourcen als auch eine flexible Anpassung an individuelle Anforderungen von Steuerungsanwendungen ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 11 angegebenen gelöst. Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten werden ausgewählte Datagramme von ersten Kommunikationsgeräten an Quell-Netzknoten zu zweiten Kommunikationsgeräten an Ziel-Netzknoten innerhalb vorgegebener periodischer Zeitintervalle übermittelt. Die ausgewählten Datagramme sind Datenströmen zugeordnet und werden über Pfade übermittelt, die dritte Kommunikationsgeräte an Zwischen-Netzknoten umfassen. Die vorgegebenen Zeitintervalle werden an allen Netzknoten synchronisiert. Zur Reservierung von durch die ersten, zweiten und dritten Kommunikationsgeräte bereitzustellenden Ressourcen spezifizieren an die ersten Kommunikationsgeräte angeschlossene Endgeräte jeweils Dienstgüteparameter für die Datenströme. Dagegen spezifizieren an die zweiten Kommunikationsgeräte angeschlossene Endgeräte für eine Reservierungsanfrage jeweils einen Datenstrom-Identifikator.

Erfindungsgemäß überprüft jedes Kommunikationsgerät entlang eines Pfads für einen Datenstrom anhand der Dienstgüteparameter bei einer Reservierungsanfrage jeweils, ob im jeweiligen Kommunikationsgerät ausreichende Ressourcen zur Datenübermittlung unter Einhaltung der spezifizierten Dienstgüteparameter verfügbar sind. Reservierungsanfragen werden vorzugsweise entsprechend IEEE 802.1Qcc behandelt. Die durch die Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Die Pfade für die Datenströme werden vorteilhafterweise mittels Shortest Path Bridging entsprechend IEEE 802.1aq ermittelt.

Konfigurationssteuerungseinheiten der Kommunikationsgeräte entlang eines Pfads ermitteln für einen Datenstrom bei ausreichenden Ressourcen erfindungsgemäß jeweils Konfigurationsinformationen und richten das jeweilige Kommunikationsgerät entsprechend den ermittelten Konfigurationsinformationen zur Ressourcen-Bereitstellung für die Datenströme ein. Vorzugsweise wird bei ausreichenden Ressourcen jeweils eine dem spezifizierten Datenstrom-Identifikator zugeordnete Multicast-Adresse an ein anfragendes, an einen Ziel-Netzknoten angeschlossenes Endgerät übermittelt.

Erfindungsgemäß wird für Datenströme, die auf Endgeräten ablaufenden ausgewählten Steuerungsanwendungen zugeordnet sind, jeweils ein individuelles Zeitfenster innerhalb der vorgegebenen Zeitintervalle spezifiziert. Die Zeitfenster weisen jeweils eine individuelle Zyklusdauer auf, die ein Vielfaches einer allgemeinen Zyklusdauer ist oder der allgemeinen Zyklusdauer entspricht. Die ersten bzw. zweiten Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt. Auf diese Weise können Zeitfenster für zyklischen Datenverkehr gleichmäßig verteilt und zur Verfügung stehende Ressourcen effizient genutzt werden. Insbesondere können hierfür Startzeitpunkte für Datenverkehr mit längerer Zyklusdauer in durch Datenverkehr mit niedriger Zyklusdauer nicht genutzte Phasen verlegt werden.

Die Kommunikationsgeräte sind vorzugsweise über ein Time-sensitive Network, insbesondere entsprechend IEEE 802.1Q, IEEE 802.1AB, IEEE 802.1AS, IEEE 802.1BA bzw. IEEE 802.1CB, miteinander verbunden. Eine Weiterleitung der ausgewählten Datagramme kann beispielsweise mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper bzw. Priority-Based Shaper gesteuert werden.

Das erfindungsgemäße Kommunikationsgerät ist zur Durchführung eines Verfahrens entsprechend vorangehenden Ausführungen vorgesehen und weist mehrere Anschlüsse zur Verbindung mit weiteren Kommunikationsgeräten sowie ein Koppelelement auf, durch das die Anschlüsse schaltbar miteinander verbindbar sind. Das Kommunikationsgerät ist dafür ausgestaltet und eingerichtet, ausgewählte Datagramme von ersten Kommunikationsgeräten an Quell-Netzknoten zu zweiten Kommunikationsgeräten an Ziel-Netzknoten innerhalb vorgegebener periodischer Zeitintervalle zu übermitteln, wobei die ausgewählten Datagramme Datenströmen zugeordnet sind und über Pfade, die dritte Kommunikationsgeräte an Zwischen-Netzknoten umfassen, übermittelt werden. Außerdem ist das Kommunikationsgerät ist dafür ausgestaltet und eingerichtet, die vorgegebenen Zeitintervalle mit anderen Netzknoten zu synchronisieren und anhand für einen Datenstrom spezifizierter Dienstgüteparameter bei einer Reservierungsanfrage zu überprüfen, ob im Kommunikationsgerät ausreichende Ressourcen zur Datenübermittlung unter Einhaltung der spezifizierten Dienstgüteparameter verfügbar sind.

Darüber hinaus ist das erfindungsgemäße Kommunikationsgerät dafür ausgestaltet und eingerichtet, mittels einer Konfigurationssteuerungseinheit Konfigurationsinformationen ermitteln und sich entsprechend den ermittelten Konfigurationsinformationen zur Ressourcen-Bereitstellung für die Datenströme einzurichten. Des Weiteren ist das Kommunikationsgerät dafür ausgestaltet und eingerichtet, für ausgewählte Steuerungsanwendungen jeweils zu überprüfen, ob ein spezifiziertes Zeitfenster zur Datenübermittlung verfügbar ist. Für Datenströme, die auf Endgeräten ablaufenden ausgewählten Steuerungsanwendungen zugeordnet sind, ist jeweils ein individuelles Zeitfenster innerhalb der vorgegebenen Zeitintervalle spezifizierbar, wobei die Zeitfenster jeweils eine individuelle Zyklusdauer aufweisen, die ein Vielfaches einer allgemeinen Zyklusdauer ist oder der allgemeinen Zyklusdauer entspricht.

Ferner ist das erfindungsgemäße Kommunikationsgerät dafür ausgestaltet und eingerichtet, bei einem verfügbaren Zeitfenster jeweils eine Information über einen Beginn des Zeitfensters innerhalb der vorgegebenen Zeitintervalle an das Endgerät zu übermitteln, auf dem die jeweilige ausgewählte Steuerungsanwendung abläuft, und Datenströme, die ausgewählten Steuerungsanwendungen zugeordnet sind, jeweils entsprechend der Information über den Beginn des individuellen Zeitfensters zu übermitteln.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: eine schematische Darstellung einer Verteilung von individuellen Zeitfenstern für Steuerungsanwendungen innerhalb eines allgemeinen Zyklus für periodisch übermittelte Datenrahmen.

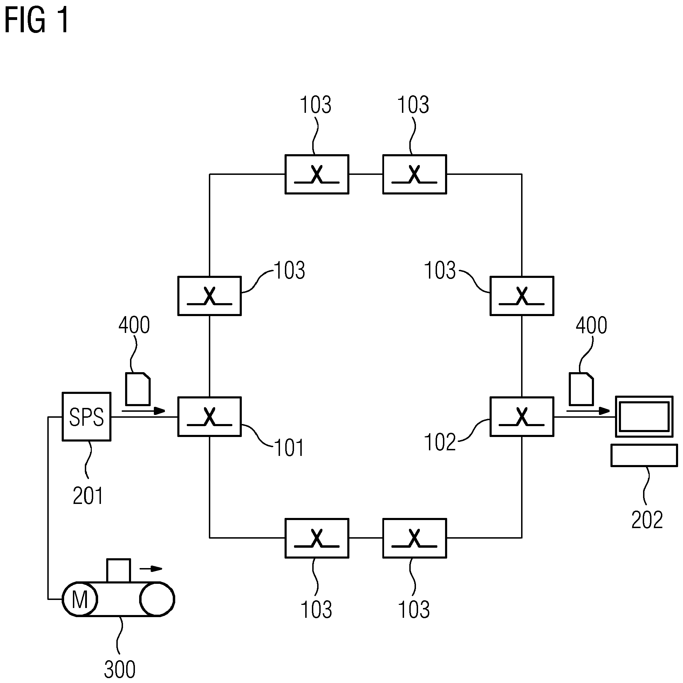

Das in Figur 1 dargestellte Kommunikationssystem für ein industrielles Automatisierungssystems umfasst mehrere Kommunikationsgeräte 101-103. Die Kommunikationsgeräte 101-103 können beispielsweise Bridges, Switches oder Router sein und zum Anschluss von speicherprogrammierbaren Steuerungen 201, Eingabe/Ausgabe-Einheiten (I/O-Module) oder Bedien- und Beobachtungsstationen 202 des industriellen Automatisierungssystems dienen. Im vorliegenden Ausführungsbeispiel ist das die Kommunikationsgeräte 101-103 umfassende Kommunikationsnetz als Time-sensitive Network ausgestaltet, insbesondere entsprechend IEEE 802.1Q, IEEE 802.1AB, IEEE 802.1AS, IEEE 802.1BA bzw. IEEE 802.1CB.

Speicherprogrammierbare Steuerungen 201 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 201 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 300. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind im vorliegenden Ausführungsbeispiel über ein Rückwandbus-System miteinander verbunden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Automatisierungsgeräte, die an Quell-Netzknoten angeschlossene Kommunikationsendgeräte darstellen und eine Talker-Funktion haben, werden Informationen bzw. Dienste über Multicast-Datenströme zur Nutzung an zweiten Automatisierungsgeräten bereitgestellt, die an Ziel-Netzknoten angeschlossene Kommunikationsendgeräte darstellen und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 201 eine Talker-Funktion, während die Bedien- und Beobachtungsstation 202 eine Listener-Funktion aufweist und insbesondere durch die speicherprogrammierbare Steuerung 201 bereitgestellte Informationen empfängt. Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit würden sowohl die speicherprogrammierbare Steuerung 201 als auch die Bedien- und Beobachtungsstation beide Funktionen wahrnehmen. Im Sinn einer vereinfachten Darstellung wird nachfolgend davon ausgegangen, dass beide Geräte jeweils nur eine zugeordnete Funktion aufweisen.

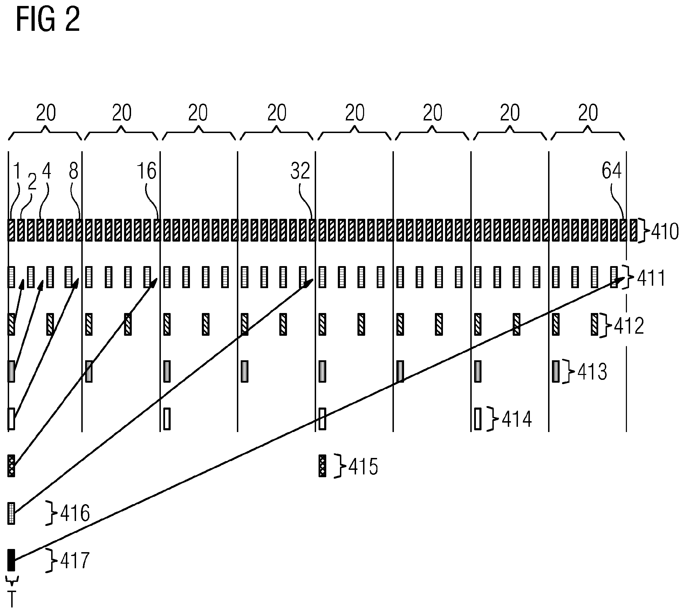

Im vorliegenden Ausführungsbeispiel ausgewählte Datagramme 400 werden als Multicast-Datenströme von ersten Kommunikationsgeräten 101 an Quell-Netzknoten zu zweiten Kommunikationsgeräten 102 an Ziel-Netzknoten über dritte Kommunikationsgeräte 103 an Zwischen-Netzknoten innerhalb vorgegebener periodischer Zeitintervalle 20 übermittelt (siehe auch Figur 2). Dabei werden die vorgegebenen Zeitintervalle 20 an allen Netzknoten synchronisiert. Eine Weiterleitung der ausgewählten Datagramme kann insbesondere mittels Frame Preemption gemäß IEEE 802.1Qbu, Time-Aware Shaper gemäß IEEE 802.1Qbv, Credit-Based Shaper gemäß IEEE 802.1Qav, Burst Limiting Shaper, Peristaltic Shaper bzw. Priority-Based Shaper gesteuert werden.

Zur Reservierung von durch die ersten, zweiten und dritten Kommunikationsgeräte 101-103 bereitzustellenden Ressourcen spezifizieren an die ersten Kommunikationsgeräte 101 angeschlossene Endgeräte, beispielsweise die speicherprogrammierbare Steuerung 201, im Rahmen einer Datenstrom-Anmeldung jeweils Dienstgüteparameter für die Datenströme. Die durch die Kommunikationsgeräte 101-103 bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Bei erfolgreicher Datenstrom-Anmeldung bzw. grundsätzlicher Erfüllbarkeit spezifizierter Dienstgüte-Anforderungen erfolgt jeweils eine Zuordnung eines Datenstrom-Identifikators. Für eine Reservierungsanfrage spezifizieren an die zweiten Kommunikationsgeräte 102 angeschlossene Endgeräte, beispielsweise die Bedien- und Beobachtungsstation 202, einen jeweiligen Datenstrom-Identifikator. Im vorliegenden Ausführungsbeispiel werden die Reservierungsanfragen entsprechend IEEE 802.1Qcc behandelt. Darüber hinaus werden Datenströme auf Reservierungsanfragen vorzugsweise jeweils bidirektional eingerichtet.

Entsprechend einem dezentralen Ansatz zur Reservierung von Ressourcen zur Übermittlung von Datenströmen überprüft jedes Kommunikationsgerät 101-103 entlang eines Pfads für einen Datenstrom anhand der Dienstgüteparameter bei einer Reservierungsanfrage jeweils, ob im jeweiligen Kommunikationsgerät ausreichende Ressourcen zur Datenübermittlung unter Einhaltung der spezifizierten Dienstgüteparameter verfügbar sind. Eine zentrale Instanz zur Ressourcenverwaltung oder Pfadermittlung ist mit dem dezentralen Ansatz zur RessourcenReservierung für Datenströme nicht erforderlich. Die Pfade für die Datenströme können beispielsweise mittels Shortest Path Bridging entsprechend IEEE 802.1aq ermittelt werden. Bei ausreichenden Ressourcen wird jeweils eine dem spezifizierten Datenstrom-Identifikator zugeordnete Multicast-Adresse an ein anfragendes, an einen Ziel-Netzknoten angeschlossenes Endgerät übermittelt. Außerdem ermitteln Konfigurationssteuerungseinheiten der Kommunikationsgeräte entlang eines Pfads für einen Datenstrom bei ausreichenden Ressourcen jeweils Konfigurationsinformationen und richten das jeweilige Kommunikationsgerät entsprechend den ermittelten Konfigurationsinformationen zur Ressourcen-Bereitstellung für die Datenströme ein.

Entsprechend Figur 2 werden den periodischen Zeitintervallen 20 für Datenströme, die auf Endgeräten ablaufenden ausgewählten Steuerungsanwendungen zugeordnet sind, jeweils individuelle anwendungsspezifische Zeitfenster 411-417 überlagert, die eine Untermenge einer Folge insgesamt zur Verfügung stehender Zeitfenster 410 bilden und im vorliegenden Ausführungsbeispiel eine einheitliche Dauer T aufweisen. Die anwendungsspezifischen Zeitfenster 411-417 weisen jeweils eine individuelle Zyklusdauer auf, die ein Vielfaches einer allgemeinen Zyklusdauer ist, die im vorliegenden Ausführungsbeispiel 1 ms beträgt. Grundsätzlich kann die jeweilige individuelle Zyklusdauer auch der allgemeinen Zyklusdauer entsprechen. In Figur 2 sind beispielhaft
- erste anwendungsspezifische Zeitfenster 411 mit einer Zyklusdauer von 2 ms,
- zweite anwendungsspezifische Zeitfenster 412 mit einer Zyklusdauer von 4 ms,
- dritte anwendungsspezifische Zeitfenster 413 mit einer Zyklusdauer von 8 ms,
- vierte anwendungsspezifische Zeitfenster 414 mit einer Zyklusdauer von 16 ms,
- fünfte anwendungsspezifische Zeitfenster 415 mit einer Zyklusdauer von 32 ms,
- sechste anwendungsspezifische Zeitfenster 416 mit einer Zyklusdauer von 64 ms und
- siebte anwendungsspezifische Zeitfenster 417 mit einer Zyklusdauer von 128 ms dargestellt.

Die ersten und zweiten Kommunikationsgeräte 101, 102 überprüfen für lokale zugeordnete ausgewählte Steuerungsanwendungen, ob ein jeweils spezifiziertes anwendungsspezifisches Zeitfenster 411-417 zur Datenübermittlung verfügbar ist. Bei einem verfügbaren passenden Zeitfenster wird jeweils zunächst dessen Beginn innerhalb der Folge der insgesamt zur Verfügung stehenden Zeitfenster 410 ermittelt und eine Information über den Beginn des Zeitfensters an das Endgerät übermittelt wird, auf dem die jeweilige ausgewählte Steuerungsanwendung abläuft. Damit werden Datenströme, die ausgewählten Steuerungsanwendungen zugeordnet sind, jeweils entsprechend der Information über den Beginn des individuellen Zeitfensters übermittelt. Vorteilhafterweise überprüfen jeweils die ersten bzw. zweiten Kommunikationsgeräte 101, 102, an die jeweils ein Endgerät angeschlossen ist, auf dem eine ausgewählte Steuerungsanwendung abläuft, ob ein spezifiziertes anwendungsspezifisches Zeitfenster 411-417 zur Datenübermittlung verfügbar ist.

Entsprechend Figur 2 wird der jeweilige Beginn der anwendungsspezifischen Zeitfenster 411-417 wie per Pfeil angedeutet so verschoben, dass eine im Wesentlichen geschlossene Folge von Zeitfenstern entsteht. Durch oben erwähnte Synchronisierung aller Netzknoten auf die periodischen Zeitintervalle 20 mit der allgemeinen Zyklusdauer weisen die Zeitfenster an allen Netzknoten identische Fensterpositionen auf. Somit können die ersten und zweiten Kommunikationsgeräte 101, 102 den Beginn der jeweiligen anwendungsspezifischen Zeitfenster 411-417 unabhängig von anderen ersten, zweiten oder dritten Kommunikationsgeräten 101-103 ermitteln.

Im vorliegenden Ausführungsbeispiel wird der Beginn der anwendungsspezifischen Zeitfenster 411-417 je nach deren Zyklusdauer auf folgende Fensterpositionen gelegt:
- für erste anwendungsspezifische Zeitfenster 411 auf Fensterposition 1,
- für zweite anwendungsspezifische Zeitfenster 412 auf Fensterposition 2,
- für dritte anwendungsspezifische Zeitfenster 413 auf Fensterposition 4,
- für vierte anwendungsspezifische Zeitfenster 414 auf Fensterposition 8,
- für fünfte anwendungsspezifische Zeitfenster 415 auf Fensterposition 16,
- für sechste anwendungsspezifische Zeitfenster 416 auf Fensterposition 32 und
- für siebte anwendungsspezifische Zeitfenster 417 auf Fensterposition 64.

Insgesamt kann der Beginn von anwendungsspezifischen Zeitfenstern mit längerer Zyklusdauer so verlegt werden, dass eine verteilte, homogenere Netzbelastung erzielt wird.

## Patentansprüche

1. Verfahren zum Betrieb eines Kommunikationssystems zur Übermittlung zeitkritischer Daten, bei dem
- ausgewählte Datagramme (400) von ersten Kommunikationsgeräten (101) an Quell-Netzknoten zu zweiten Kommunikationsgeräten an Ziel-Netzknoten (102) innerhalb vorgegebener periodischer Zeitintervalle (20) übermittelt werden,
- die ausgewählten Datagramme Datenströmen zugeordnet sind und über Pfade, die dritte Kommunikationsgeräte (103) an Zwischen-Netzknoten umfassen, übermittelt werden,
- die vorgegebenen Zeitintervalle an allen Netzknoten synchronisiert werden,
- an die ersten Kommunikationsgeräte angeschlossene Endgeräte (201) zur Reservierung von durch die ersten, zweiten und dritten Kommunikationsgeräte bereitzustellenden Ressourcen jeweils Dienstgüteparameter für die Datenströme spezifizieren,
- an die zweiten Kommunikationsgeräte angeschlossene Endgeräte (202) für eine Reservierungsanfrage jeweils einen Datenstrom-Identifikator spezifizieren,
- jedes Kommunikationsgerät (101-103) entlang eines Pfads für einen Datenstrom anhand der Dienstgüteparameter bei einer Reservierungsanfrage jeweils überprüft, ob im jeweiligen Kommunikationsgerät ausreichende Ressourcen zur Datenübermittlung unter Einhaltung der spezifizierten Dienstgüteparameter verfügbar sind,
- Konfigurationssteuerungseinheiten der Kommunikationsgeräte (101-103) entlang eines Pfads für einen Datenstrom bei ausreichenden Ressourcen jeweils Konfigurationsinformationen ermitteln und das jeweilige Kommunikationsgerät entsprechend den ermittelten Konfigurationsinformationen zur Ressourcen-Bereitstellung für die Datenströme einrichten,
**dadurch gekennzeichnet, dass**
- für Datenströme, die auf Endgeräten (201, 202) ablaufenden ausgewählten Steuerungsanwendungen zugeordnet sind, jeweils ein individuelles Zeitfenster (411-417) innerhalb der vorgegebenen Zeitintervalle spezifiziert wird, wobei die Zeitfenster jeweils eine individuelle Zyklusdauer aufweisen, die ein Vielfaches einer allgemeinen Zyklusdauer ist oder der allgemeinen Zyklusdauer entspricht,
- die ersten und/oder zweiten Kommunikationsgeräte (101, 102) für die ausgewählten Steuerungsanwendungen jeweils überprüfen, ob ein spezifiziertes Zeitfenster zur Datenübermittlung verfügbar ist,
- bei einem verfügbaren Zeitfenster (411-417) jeweils eine Information über einen Beginn des Zeitfensters innerhalb der vorgegebenen Zeitintervalle an das Endgerät (201, 202) übermittelt wird, auf dem die jeweilige ausgewählte Steuerungsanwendung abläuft,
- Datenströme, die ausgewählten Steuerungsanwendungen zugeordnet sind, jeweils entsprechend der Information über den Beginn des individuellen Zeitfensters übermittelt werden.

2. Verfahren nach Anspruch 1,
bei dem die durch die Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

3. Verfahren nach einem der Ansprüche 1 oder 2,
bei dem die Kommunikationsgeräte über ein Time-sensitive Network, insbesondere entsprechend IEEE 802.1Q, IEEE 802.1AB, IEEE 802.1AS, IEEE 802.1BA und/oder IEEE 802.1CB, miteinander verbunden sind.

4. Verfahren nach Anspruch 3,
bei dem eine Weiterleitung der ausgewählten Datagramme mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper und/oder Priority-Based Shaper gesteuert wird.

5. Verfahren nach einem der Ansprüche 1 bis 4,
bei dem die Datenströme auf Reservierungsanfragen jeweils bidirektional eingerichtet werden.

6. Verfahren nach einem der Ansprüche 1 bis 5,
bei dem bei ausreichenden Ressourcen jeweils eine dem spezifizierten Datenstrom-Identifikator zugeordnete Multicast-Adresse an ein anfragendes, an einen Ziel-Netzknoten angeschlossenes Endgerät übermittelt wird.

7. Verfahren nach Anspruch 6,
bei dem die Reservierungsanfragen entsprechend IEEE 802.1Qcc behandelt werden.

8. Verfahren nach einem der Ansprüche 6 oder 7,
bei dem den an Quell-Netzknoten angeschlossenen Endgeräten jeweils eine Talker-Funktion zugeordnet ist und bei dem den an Ziel-Netzknoten angeschlossenen Endgeräten jeweils eine Listener-Funktion zugeordnet ist.

9. Verfahren nach einem der Ansprüche 1 bis 8,
bei dem die Pfade für die Datenströme mittels Shortest Path Bridging entsprechend IEEE 802.1aq ermittelt werden.

10. Verfahren nach einem der Ansprüche 1 bis 9,
bei dem die ersten und/oder zweiten Kommunikationsgeräte, an die jeweils ein Endgerät angeschlossen ist, auf dem eine ausgewählte Steuerungsanwendung abläuft, jeweils überprüfen, ob ein spezifiziertes Zeitfenster zur Datenübermittlung verfügbar ist.

11. Kommunikationsgerät zur Durchführung des Verfahrens nach einem der Ansprüche 1 bis 10 mit
- mehreren Anschlüssen zur Verbindung mit weiteren Kommunikationsgeräten,
- einem Koppelelement, durch das die Anschlüsse schaltbar miteinander verbindbar sind,
- wobei das Kommunikationsgerät dafür ausgestaltet und eingerichtet ist, ausgewählte Datagramme von ersten Kommunikationsgeräten an Quell-Netzknoten zu zweiten Kommunikationsgeräten an Ziel-Netzknoten innerhalb vorgegebener periodischer Zeitintervalle zu übermitteln, wobei die ausgewählten Datagramme Datenströmen zugeordnet sind und über Pfade, die dritte Kommunikationsgeräte an Zwischen-Netzknoten umfassen, übermittelt werden,
- die vorgegebenen Zeitintervalle mit anderen Netzknoten zu synchronisieren,
- anhand für einen Datenstrom spezifizierter Dienstgüteparameter bei einer Reservierungsanfrage zu überprüfen, ob im Kommunikationsgerät ausreichende Ressourcen zur Datenübermittlung unter Einhaltung der spezifizierten Dienstgüteparameter verfügbar sind,
- mittels einer Konfigurationssteuerungseinheit Konfigurationsinformationen ermitteln und sich entsprechend den ermittelten Konfigurationsinformationen zur Ressourcen-Bereitstellung für die Datenströme einzurichten,
- für ausgewählte Steuerungsanwendungen jeweils zu überprüfen, ob ein spezifiziertes Zeitfenster zur Datenübermittlung verfügbar ist, wobei für Datenströme, die auf Endgeräten ablaufenden ausgewählten Steuerungsanwendungen zugeordnet sind, jeweils ein individuelles Zeitfenster innerhalb der vorgegebenen Zeitintervalle spezifizierbar ist, wobei die Zeitfenster jeweils eine individuelle Zyklusdauer aufweisen, die ein Vielfaches einer allgemeinen Zyklusdauer ist oder der allgemeinen Zyklusdauer entspricht,
- bei einem verfügbaren Zeitfenster jeweils eine Information über einen Beginn des Zeitfensters innerhalb der vorgegebenen Zeitintervalle an das Endgerät zu übermitteln, auf dem die jeweilige ausgewählte Steuerungsanwendung abläuft,
- Datenströme, die ausgewählten Steuerungsanwendungen zugeordnet sind, jeweils entsprechend der Information über den Beginn des individuellen Zeitfensters zu übermitteln.

## Claims

1. Method for operating a communication system for transmitting time-critical data, in which
- selected datagrams (400) are transmitted from first communication devices (101) at source network nodes to second communication devices at destination network nodes (102) within predefined periodic time intervals (20),
- the selected datagrams are assigned to data streams and are transmitted via paths that comprise third communication devices (103) at intermediate network nodes,
- the predefined time intervals are synchronized at all network nodes,
- terminals (201) connected to the first communication devices specify, in each particular case, quality of service parameters for the data streams in order to reserve resources to be provided by the first, second and third communication devices,
- terminals (202) connected to the second communication devices specify, in each particular case, a data stream identifier for a reservation request,
- each communication device (101-103) along a path for a data stream takes the quality of service parameters as a basis for checking, in each particular case, in the event of a reservation request, whether there are sufficient resources available in the respective communication device for data transmission while observing the specified quality of service parameters,
- if there are sufficient resources then configuration control units of the communication devices (101-103) along a path ascertain, in each particular case, configuration information for a data stream and set up the respective communication device for resource provision for the data streams in accordance with the ascertained configuration information,
**characterized in that**
- an individual time window (411-417) within the predefined time intervals is specified, in each particular case, for data streams assigned to selected control applications running on terminals (201, 202), the time windows having, in each particular case, an individual cycle duration that is a multiple of a general cycle duration or corresponds to the general cycle duration,
- the first and/or second communication devices (101, 102) check, in each particular case, for the selected control applications whether a specified time window is available for data transmission,
- if a time window (411-417) is available then information about a beginning of the time window is transmitted, in each particular case, within the predefined time intervals to the terminal (201, 202) on which the respective selected control application runs,
- data streams assigned to selected control applications are transmitted, in each particular case, in accordance with the information about the beginning of the individual time window.

2. Method according to Claim 1,
in which the resources to be provided by the communication devices comprise usable transfer time windows, bandwidth, assured maximum latency, number of queues, queue cache and/or address cache in switches or bridges.

3. Method according to either of Claims 1 and 2,
in which the communication devices are connected to one another via a time-sensitive network, in particular in accordance with IEEE 802.1Q, IEEE 802.1AB, IEEE 802.1AS, IEEE 802.1BA and/or IEEE 802.1CB.

4. Method according to Claim 3,
in which forwarding of the selected datagrams is controlled by means of frame pre-emption, in particular in accordance with IEEE 802.1Qbu, time-aware shapers, in particular in accordance with IEEE 802.1Qbv, credit-based shapers, in particular in accordance with IEEE 802.1Qav, burst limiting shapers, peristaltic shapers and/or priority-based shapers.

5. Method according to one of Claims 1 to 4,
in which the data streams are set up, in each particular case, bidirectionally upon reservation requests.

6. Method according to one of Claims 1 to 5,
in which if there are sufficient resources then a multicast address assigned to the specified data stream identifier is transmitted, in each particular case, to a requesting terminal connected to a destination network node.

7. Method according to Claim 6,
in which the reservation requests are handled in accordance with IEEE 802.1Qcc.

8. Method according to either of Claims 6 and 7,
in which the terminals connected to source network nodes each have an assigned talker function and in which the terminals connected to destination network nodes each have an assigned listener function.

9. Method according to one of Claims 1 to 8,
in which the paths for the data streams are ascertained by means of shortest path bridging in accordance with IEEE 802.1aq.

10. Method according to one of Claims 1 to 9,
in which the first and/or second communication devices, to each of which is connected a terminal on which a selected control application runs, check, in each particular case, whether a specified time window is available for data transmission.

11. Communication device for carrying out the method according to one of Claims 1 to 10, having
- multiple connections for connection to further communication devices,
- a coupling element by means of which the connections are switchably connectable to one another,
- wherein the communication device is designed and set up to transmit selected datagrams from first communication devices at source network nodes to second communication devices at destination network nodes within predefined periodic time intervals, the selected datagrams being assigned to data streams and being transmitted via paths that comprise third communication devices at intermediate network nodes,
- to synchronize the predefined time intervals with other network nodes,
- to take quality of service parameters specified for a data stream as a basis for checking, in the event of a reservation request, whether there are sufficient resources available in the communication device for data transmission while observing the specified quality of service parameters,
- to use a configuration control unit to ascertain configuration information and to set itself up for resource provision for the data streams in accordance with the ascertained configuration information,
- to check, in each particular case, for selected control applications whether a specified time window is available for data transmission, wherein an individual time window within the predefined time intervals is specifiable, in each particular case, for data streams assigned to selected control applications running on terminals, the time windows having, in each particular case, an individual cycle duration that is a multiple of a general cycle duration or corresponds to the general cycle duration,
- if a time window is available, to transmit, in each particular case, information about a beginning of the time window within the predefined time intervals to the terminal on which the respective selected control application runs,
- to transmit, in each particular case, data streams assigned to selected control applications in accordance with the information about the beginning of the individual time window.

## Revendications

1. Procédé pour faire fonctionner un système de communication de transmission de données critiques dans le temps, dans lequel
- on transmet des datagrammes (400) sélectionnés de premiers appareils (101) de communication en des noeuds de réseau source à des deuxièmes appareils de communication en des noeuds (102) de réseau cible dans des intervalles (20) temps périodiques donnés à l'avance,
- on affecte les datagrammes sélectionnés à des flux de données et on les transmet par des chemins, qui comprennent des troisièmes appareils (103) de communication en des noeuds de réseau intermédiaires,
- on synchronise les intervalles de temps donnés à l'avance en tous les noeuds du réseau,
- des terminaux (201) raccordés aux premiers appareils de communication spécifient respectivement des paramètres de qualité de service des flux de données pour la réservation de ressources mises à disposition par les premiers, deuxièmes et troisièmes appareils de communication,
- des terminaux (202) raccordés aux deuxièmes appareils de communication spécifient respectivement un identifiant de flux de données pour une demande de réservation,
- chaque appareil (101-103) de communication contrôle respectivement, le long d'un chemin pour un flux de données, à l'aide des paramètres de qualité de service, lors d'une demande de réservation, si sont disponibles, dans l'appareil de communication respectif, des ressources suffisantes pour la transmission de données tout en maintenant les paramètres spécifiés de qualité de service,
- des unités de commande de configuration des appareils (101-103) de communication déterminent le long d'un chemin pour un flux de données, lorsque les ressources sont suffisantes, respectivement des informations de configuration et agencent l'appareil respectif de communication conformément aux informations de configuration déterminées pour la mise à disposition de ressources pour les flux de données,
**caractérisé en ce que**
- pour des flux de données, qui sont associés à des applications de commande sélectionnées se déroulant sur des terminaux (201, 202), on spécifie respectivement un créneau (411-417) temporel individuel à l'intérieur des intervalles de temps donnés à l'avance, dans lequel les créneaux temporels ont respectivement une durée de cycle individuelle, qui correspond à un multiple d'une durée de cycle générale ou à la durée de cycle générale,
- les premiers et/ou deuxièmes appareils (101, 102) de communication contrôlent, pour les applications de commande sélectionnées respectivement, si un créneau temporel spécifié est disponible pour la transmission de données,
- si un créneau (411-417) temporel est disponible, on transmet respectivement une information sur un début du créneau temporel dans les intervalles de temps donnés à l'avance au terminal (201, 202), sur lequel l'application de commande sélectionnée respective se déroule,
- on transmet des flux de données, qui sont associés aux applications de commande sélectionnées, respectivement conformément à l'information sur le début du créneau temporel individuel.

2. Procédé suivant la revendication 1,
dans lequel des ressources, mises à disposition par les appareils de communication, comprennent des créneaux temporels de transmission utiles, des largeurs de bande, une latence maximum sécurisée, un nombre de file d'attente, un cache de file d'attente et/ou un cache d'adresse dans des switches ou des bridges.

3. Procédé suivant l'une des revendications 1 ou 2,
dans lequel les appareils de communication sont reliés entre eux par un réseau time-sensitive, en particulier conformément à IEEE 802.1Q, IEEE 802.1AB, IEEE 802.1AS, IEEE 802.1BA et/ou IEEE 802.1CB.

4. Procédé suivant la revendication 3,
dans lequel on commande un acheminement des datagrammes sélectionnés, au moyen d'une frame préemption, en particulier suivant IEEE 802.1Qbu, time aware shaper, en particulier suivant IEEE 802.1Qbv, credit based shaper, en particulier suivant IEEE 802.1Qav, burst limiting shaper, peristaltic shaper et/ou priority based shaper.

5. Procédé suivant l'une des revendications 1 à 4,
dans lequel on agence bidirectionnellement respectivement les flux de données sur des demandes de réservation.

6. Procédé suivant l'une des revendications 1 à 5,
dans lequel, si les ressources sont suffisantes, on transmet, respectivement à un terminal demandeur raccordé à un noeud du réseau cible, respectivement une adresse multicast associée à l'identifiant de flux de données spécifié.

7. Procédé suivant la revendication 6,
dans lequel on traite les demandes de réservation conformément à IEEE 802.1Qcc.

8. Procédé suivant l'une des revendications 6 ou 7,
dans lequel respectivement une fonction talker est associée aux terminaux raccordés aux noeuds du réseau source, et dans lequel respectivement une fonction listener est associée aux terminaux raccordés aux noeuds du réseau cible.

9. Procédé suivant l'une des revendications 1 à 8,
dans lequel on détermine les chemins des flux de données, au moyen de shortest path bridging conformément à IEEE 802.1aq.

10. Procédé suivant l'une des revendications 1 à 9,
dans lequel les premiers et/ou deuxièmes appareils de communication, auxquels est raccordé respectivement un terminal, sur lequel se déroule une application de commande sélectionnée, contrôle si un créneau temporel spécifié est disponible pour la transmission de données.

11. Appareil de communication pour effectuer le procédé suivant l'une des revendications 1 à 10, comprenant
- plusieurs accès de liaison à d'autres appareils de communication,
- un élément de liaison, par lequel les accès peuvent être reliés entre eux avec possibilité d'interruption,
- dans lequel l'appareil de communication est conformé et agencé pour transmettre des datagrammes sélectionnés de premiers appareils de communication en des noeuds de réseau source à des deuxièmes appareils de communication en des noeuds de réseau cible dans des intervalles de temps périodiques donnés à l'avance, dans lequel les datagrammes sélectionnés sont associés à des flux de données et sont transmis par des chemins, qui comprennent des troisièmes appareils de communication en des noeuds du réseau intermédiaires,
- des intervalles de temps donnés à l'avance sont synchronisés avec d'autres noeuds du réseau,
- pour, à l'aide de paramètres de qualité de service spécifiés pour un flux de donnés, contrôler lors d'une demande de réservation, si des ressources suffisantes sont disponibles dans l'appareil de communication pour la transmission de données tout en maintenant les paramètres de qualité de service spécifiés,
- pour, au moyen d'une unité de commande de configuration, déterminer des informations de configuration et s'agencer, conformément aux informations de configuration déterminées, pour la mise à disposition de ressources pour les flux de données,
- pour contrôler, respectivement pour des applications de commande sélectionnées, si un créneau temporel spécifié est disponible pour la transmission de données, dans lequel, pour des flux de données, qui sont associés à des applications de commande sélectionnées se déroulant sur des terminaux, respectivement un créneau temporel individuel peut être spécifié dans les intervalles de temps donnés à l'avance, les créneaux temporels ayant respectivement une durée de cycle individuelle, qui correspond à un multiple d'une durée de cycle générale ou à la durée de cycle générale,
- pour, si un créneau temporel est disponible, transmettre au terminal sur lequel l'application de commande sélectionnée respective se déroule, une information sur un début du créneau temporel dans les intervalles de temps donnés à l'avance,
- pour transmettre, respectivement conformément à l'information sur le début du créneau temporel individuel, des flux de données, qui sont associés aux applications de commande sélectionnées.
